(19) Europäisches Patentamt
European Patent Office
Office européen des brevets

(11) EP 0 548 682 B1

(12) **EUROPÄISCHE PATENTSCHRIFT**

(45) Veröffentlichungstag und Bekanntmachung des Hinweises auf die Patenterteilung:
**06.11.1996 Patentblatt 1996/45**

(51) Int Cl.6: **C07F 9/50**

(21) Anmeldenummer: **92121022.5**

(22) Anmeldetag: **10.12.1992**

# (54) Verfahren zur Herstellung von tertiären Phosphinen

Process for the preparation of tertiary phosphines

Procédé de préparation de phosphines tertiaires

(84) Benannte Vertragsstaaten:
**BE CH DE ES FR GB IT LI NL**

(30) Priorität: **23.12.1991 DE 4142679**

(43) Veröffentlichungstag der Anmeldung:
**30.06.1993 Patentblatt 1993/26**

(73) Patentinhaber: **BASF Aktiengesellschaft**
**67063 Ludwigshafen (DE)**

(72) Erfinder: **Wettling, Thomas, Dr.**
**W-6703 Limburgerhof (DE)**

(56) Entgegenhaltungen:
**DE-A- 2 455 371**
**DE-A- 2 828 604**
**DE-B- 1 247 310**
**DE-B- 1 259 883**

- **Gmelin, Silicium, Teil B, Seite 111 (1959)**
- **CRC Handbook of Chemistry and Physics, 62. Ausgabe(1982), Seite B 143**
- **Hollemann-Wiberg; "Lehrbuch der anorganischen Chemie" ISBN 3-11-005962-2 (1976), Seite 639**
- **Ullmann's Encyclopedia of Industrial Chemistry, Vol. A24 (1993), Seite 7**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 548 682 B1

**Beschreibung**

Die vorliegende Erfindung betrifft ein verbessertes Verfahren zur Herstellung von tertiären Phosphinen (I) durch Reduktion der entsprechenden Phosphinoxide (IIa) oder Phosphindihalogenide (IIb).

Tertiäre Phosphine wie Triphenylphosphin und Tributylphosphin sind wichtige Agenzien für organische Synthesen nach Wittig zur Herstellung von olefinisch ungesättigten Verbindungen. Beispielsweise sind sie von großer technischer Bedeutung für die industrielle Herstellung von Vitamin A.

In diesen Synthesen gehen die tertiären Phosphine in die entsprechenden Phosphinoxide über, für die es relativ wenig unmittelbare Anwendungsmöglichkeiten gibt. Seit langem besteht daher schon die Aufgabe, Phosphinoxide in die tertiären Phosphine zu überführen, indem man sie mit Reduktionsmitteln wie Alanaten, Boranaten, Trimethylchlorsilan und Systemen wie Triethyloxoniumtetrafluoroboranat/Magnesium, Aktivkohle/Weißöl oder Wasserstoff/Siliciumtetrachlorid umsetzt oder indem man sie zunächst in die entsprechenden Phosphindihalogenide überführt und dann mit Natrium (DE-OS 26 38 720), Eisen (US-A 3 780 111) oder Aluminium (DE-C 12 59 883) reduziert.

Jedoch haben sich in der Technik alle diese Verfahren aus verschiedenen Gründen nicht bewährt, z.B. weil einige der Reduktionsmittel zu teuer sind, die erzielbaren Ausbeuten und Selektivitäten unbefriedigend sind und Reaktionsgemische anfallen, die erhebliche verfahrenstechnische Probleme bei der Abtrennung der Feststoffe nach sich ziehen. Von Nachteil sind auch hochkorrosive Gase wie Chlor- und Bromwasserstoff, die bei der Reduktion von Phosphinhalogeniden mit Wasserstoff entstehen (JP-OS 55/149 294).

Der Erfindung lag daher die Aufgabe zugrunde, tertiäre Phosphine auf wirtschaftlichere und verfahrenstechnisch einfachere Weise als bisher wieder aus den entsprechenden Phosphinoxiden oder Phosphindihalogeniden zu regenerieren.

Demgemäß wurde ein Verfahren zur Herstellung von tertiären Phosphinen (I) durch Reduktion der entsprechenden Phosphinoxide (IIa) oder Phosphindihalogenide (IIb) gefunden, welches dadurch gekennzeichnet ist, daß man hierzu als Reduktionsmittel Silicium oder eine Siliciumlegierung verwendet.

Als Ausgangsverbindungen kommen vor allem Phosphinoxide der allgemeinen Formel IIa' in Betracht

$$R_3P{=}O \qquad \text{IIa'}$$

in der die Reste R gleich oder verschieden sein können und für $C_1$-$C_{20}$-Alkyl, $C_5$-$C_{12}$-Cycloalkyl, Aralkyl oder Aryl stehen, wobei zwei der Alkylreste R mit dem Phosphoratom auch einen 4- bis 8-gliedrigen Ring bilden können.

Das gleiche gilt für die Phosphindihalogenide der allgemeinen Formel IIb'

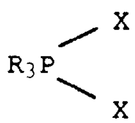

IIb'

in der X Chlor oder Brom, bevorzugt Chlor, bedeutet.

Die Reste R können auch einen oder mehrere inerte Substituenten tragen, beispielsweise Halogen, Alkyl- oder Alkoxygruppen.

Allgemein ist das gute Gelingen des erfindungsgemäßen Verfahrens nach den bisherigen Beobachtungen von der Art der Reste R nicht erkennbar abhängig.

Prinzipiell lassen sich die Phosphinoxide IIa unmittelbar reduzieren

$$2\ R_3\ P{=}O + Si \rightarrow 2\ R_3P + SiO_2$$

jedoch ist den Phosphindihalogeniden IIb der Vorrang zu geben, weil man hierbei nicht den Feststoff Siliciumdioxid, sondern die flüssigen Siliciumtetrahalogenide als Koppelprodukte erhält, welche sich besonders einfach destillativ von den Phosphinen I abtrennen lassen.

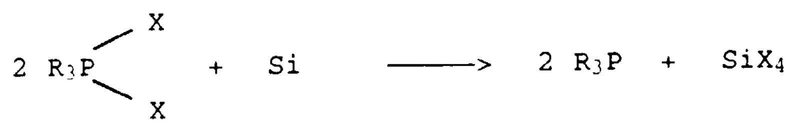

Technisch wichtige Phosphindihalogenide IIb sind beispielsweise die Chloride und Bromide folgender tertiärer Phosphine:

Tripropylphoshin
Tributylphosphin
Tricyclohexylphosphin
Tricyclododecylphosphin
Triphenylphosphin
Tritolylphosphin
Trianisylphosphin
Trinaphthylphosphin
Di-(chlorphenyl)-phenylphosphin und
Dibutyl-phenylphosphin

Die Phosphindihalogenide IIb sind in bekannter Weise aus den entsprechenden Phosphinoxiden IIa erhältlich, beispielsweise durch Umsetzung mit Phosphorpentahalogeniden oder wie im Falle der Phosphindichloride durch Umsetzung mit Phosgen oder Thionylchlorid (DE-C 11 92 205 bzw. Houben-Weyl, Methoden der Org. Chemie, Bd. 12/1, S. 129 (1963)).

Als Reduktionsmittel wird Silicium oder Silicium in Form seiner Legierungen verwendet. Bevorzugt wird die Verwendung von relativ reinem Silicium mit beispielsweise 98 bis größer 99,9 Gew.-% Siliciumgehalt oder von technischem Rohsilicium mit einem Siliciumgehalt von etwa 90 bis 98 Gew.-%.

Weiterhin eignen sich Siliciumlegierungen wie Ferrosilicium mit einem Siliciumgehalt von vorzugsweise mehr als 50 Gew.-% Silicium oder Siliciumcarbid.

Bei Verwendung von nicht ganz reinem Silicium oder von Siliciumlegierungen erhält man zwar feste Halogenide als Nebenprodukte, jedoch in relativ geringer Menge, so daß eine Aufarbeitung des Reaktionsgemisches nicht wesentlich erschwert wird.

Da es sich bei der Umsetzung um eine heterogene Reaktion handelt, ist es um so günstiger, je feiner verteilt das Reduktionsmittel vorliegt. Es empfiehlt sich daher, Silicium oder Siliciumlegierungen in Form von Pulvern oder Grieß mit einer mittleren Teilchengröße von etwa 0,05 bis 5 mm zu wählen.

Man kann das Reduktionsmittel in stöchiometrischen Mengen einsetzen, jedoch empfiehlt sich ein geringer Überschuß, um die Reaktionsgeschwindigkeit zu erhöhen. Je Mol Phosphinoxid IIa bzw. Phosphindihalogenid IIb werden vorteilhafterweise 0,5 bis 10, vorzugsweise 0,8 bis 5 mol Silicium verwendet. Nicht umgesetztes Silicium läßt sich zurückgewinnen und wieder verwenden.

Als Reaktionsmedium dienen organische Flüssigkeiten, die sich unter den Reaktionsbedingungen inert verhalten. Es ist vorteilhaft, polare hochsiedende aliphatische und aromatische Kohlenwasserstoffe wie Halogenkohlenwasserstoffe, Chlorbenzol, o-Dichlorbenzol und Benzonitril zu verwenden. Ferner kommen Ether und Polyether in Betracht. Es können aber auch unpolare Kohlenwasserstoffe verwendet werden. In der Regel ist es zweckmäßig, daß die Umsetzung in einer Menge von 0,5 bis 10 kg Flüssigkeit pro kg IIa bzw. IIb erfolgt.

Die Umsetzung kann auch ohne diese flüssigen Reaktionsmedien durchgeführt werden; so sind sie entbehrlich, wenn die Ausgangsstoffe IIa bzw. IIb im flüssigen Zustand vorliegen. Wenn feste Ausgangsstoffe umgesetzt werden, ist es vorteilhaft, ein dem jeweiligen Verfahrensprodukt entsprechendes tertiäres Phosphin zuzusetzen, um den Schmelzpunkt dieser Ausgangsstoffe herabzusetzen und die Reduktion in diesem flüssigen Reaktionsmedium auszuführen. Hier empfiehlt es sich, eine Menge von 0,1 bis 1 kg tertiärem Phosphin pro kg IIa bzw. IIb zu verwenden.

Vorzugsweise nimmt man die Reduktion bei 100 bis 300°C, insbesondere von 100 bis 250°C vor. Unterhalb von 50°C verlangsamt sich die Reaktion zu sehr und oberhalb von 300°C ist mit merklichen Nebenreaktionen zu rechnen.

Die Umsetzung findet bei einem Druck von etwa 0,5 bis 50 bar statt. Üblicherweise führt man die Umsetzung bei Normaldruck durch, es ist aber auch möglich bei höheren Drücken zu arbeiten, um die Reaktion zu beschleunigen.

Die Umsetzung kann sowohl diskontinuierlich als auch kontinuierlich durchgeführt werden. Geht man unmittelbar von den Phosphinoxiden IIa aus, empfiehlt sich die Mitverwendung katalytischer Mengen eines Halogenierungsmittels, vorzugsweise Siliciumtetrachlorid. Bei der Umsetzung von IIb empfiehlt es sich, zur Reaktionsbeschleunigung das entstandene Siliciumtetrahalogenid laufend aus der Reaktionsmischung durch Destillation zu entfernen. Die Aufarbeitung des Reaktionsgemisches erfolgt nach den üblichen Methoden wie Destillation, Extraktion und Umkristallisation.

Das erfindungsgemäße Verfahren weist gegenüber dem Stand der Technik den Vorteil auf, daß insbesondere bei Verwendung der Phosphindihalogenide als Ausgangsstoffe Siliciumtetrahalogenide als flüssige Koppelprodukte anfallen, die destillativ auf einfache Weise aus dem Reaktionsgemisch zu entfernen sind, so daß eine aufwendige Aufarbeitung des Reaktionsproduktes entfällt. Außerdem ist es vorteilhaft, daß die anfallenden Siliciumtetrahalogenide als Ausgangsmaterial zur Herstellung von hochreinem Silicium und wertvollen siliciumorganischen Verbindungen verwendet werden können.

Besondere Bedeutung hat das erfindungsgemäße Reduktionsverfahren für die Herstellung von Triphenylphosphin aus Triphenylphosphinoxid bzw. Triphenylphosphindichlorid.

Beispiel 1

Herstellung von Triphenylphosphin aus Triphenylphosphinoxid

In einem Autoklaven wurden 70 g (0,25 mol) Triphenylphosphinoxid mit 7 g (0,25 mol) Siliciumpulver in 70 g Benzonitril, 2 g (0,012 mol) Siliciumtetrachlorid und 0,5 g (0,003 mol) Eisentrichlorid 48 Stunden bei 190°C umgesetzt.

Nach der $^{31}$P-NMR-spektroskopischen Analyse des Reaktionsgemisches betrug die Ausbeute an Triphenylphosphin 20 %.

Beispiel 2

Herstellung von Triphenylphosphin aus Triphenylphosphindichlorid

333 g (1 mol) Triphenylphosphindichlorid und 28 g (1 mol) Siliciumpulver wurden in 150 ml o-Dichlorbenzol vorgelegt und auf 165°C erhitzt. Während einer Reaktionszeit von 1 Stunde wurde das dabei anfallende Siliciumtetrachlorid destillativ entfernt. Anschließend wurde die Reaktionstemperatur auf 170°C erhöht, wonach die Mischung noch weitere 2 Stunden bei dieser Temperatur gerührt wurde. Danach wurde das o-Dichlorbenzol destillativ entfernt, und nicht umgesetztes Silicium wurde durch Filtration vom Rohprodukt abgetrennt. Nach Aufarbeitung des Filtrats wurde Triphenylphosphin in 99 %iger Ausbeute erhalten.

Beispiel 3

Herstellung von Triphenylphosphin aus Triphenylphosphindichlorid

333 g (1 mol) Triphenylphosphindichlorid und 28 g (1 mol) Siliciumpulver wurden in 150 ml Benzonitril 2 Stunden bei 180°C umgesetzt. Während der Reaktion wurde das ständig entstehende Siliciumtetrachlorid destillativ aus der Mischung entfernt.

Die Aufarbeitung des Reaktionsgemisches erfolgte nach Beispiel 2. Die Ausbeute an Triphenylphosphin betrug 99 %.

Beispiel 4

Herstellung von Triphenylphosphin aus Triphenylphosphindichlorid

333 g (1 mol) Triphenylphosphindichlorid und 14 g (0,5 mol) Siliciumpulver wurden in 150 ml Benzonitril 4 Stunden bei 180°C umgesetzt.

Die weitere Durchführung erfolgte entsprechend dem Beispiel 2. Die Ausbeute an Triphenylphosphin betrug 98 %.

Beispiel 5

Herstellung von Triphenylphosphin aus Triphenylphosphindichlorid

Triphenylphosphindichlorid, das durch Umsetzung von 139 g (0,5 mol) Triphenylphosphinoxid mit 59 g (0,6 mol) Phosgen bei 210°C hergestellt worden war, wurde bei 140°C mit 66 g (0,25 mol) Triphenylphosphin versetzt. Nach Zugabe von 14 g (0,5 mol) Siliciumpulver wurde das Triphenylphosphindichlorid 2 Stunden bei 185°C reduziert, während hierbei anfallendes Siliciumtetrachlorid destillativ entfernt wurde.

Nach der $^{31}$P-NMR-spektroskopischen Analyse der Reaktionsmischung betrug die Ausbeute an Triphenylphosphin 90 %.

## Patentansprüche

1. Verfahren zur Herstellung von tertiären Phosphinen (I) durch Reduktion der entsprechenden Phosphinoxide (IIa) oder Phosphindihalogenide (IIb), dadurch gekennzeichnet, daß man als Reduktionsmittel Silicium oder eine Siliciumlegierung verwendet.

2. Verfahren zur Herstellung von tertiären Phosphinen (I) nach Anspruch 1, dadurch gekennzeichnet, daß man es auf die Herstellung von Triphenylphosphin aus Triphenylphosphinoxid bzw. Triphenylphosphindichlorid anwendet.

## Claims

1. A process for preparing tertiary phosphines (I) by reduction of the corresponding phosphine oxides (IIa) or phosphine dihalides (IIb), wherein silicon or a silicon alloy is used as reducing agent.

2. A process for preparing tertiary phosphines (I) as claimed in claim 1, which is applied to the preparation of triphenylphosphine from triphenylphosphine oxide or triphenylphosphine dichloride.

## Revendications

1. Procédé de préparation de phosphines tertiaires I par réduction des oxydes de phosphines IIa ou des dihalogénures de phosphines IIb correspondants, caractérisé par le fait que l'on utilise, en tant qu'agent réducteur, le silicium ou un alliage de silicium.

2. Procédé de préparation de phosphines tertiaires I selon la revendication 1, caractérisé par le fait qu'on l'applique à la préparation de la triphénylphosphine à partir de l'oxyde de triphénylphosphine ou du dichlorure de triphénylphosphine.